# EUROPEAN PATENT SPECIFICATION

(11) **EP 2 958 514 B1**
(45) Date of publication and mention of the grant of the patent: **08.07.2020**
(21) Application number: 14710820.3
(22) Date of filing: 14.02.2014
(51) Int. Cl.: A61C 8/00, A61C 9/00

(54) **PRECALIBRATED DENTAL IMPLANT AID**
VORKALIBRIERTE ZAHNIMPLANTATSHILFE
AIDE POUR IMPLANT DENTAIRE PRÉCALIBRÉ

(30) Priority: 20.02.2013 EP 13156040
(43) Date of publication of application: 30.12.2015
(73) Proprietor: GC Europe, 3001 Heverlee (BE)
(72) Inventor: MILTAU, Kevin, 5575 Willerzie (BE); BOGAERTS, Walter, 1780 Wemmel (BE); WEISS, Özlem, 65824 Schwalbach am Taunus (DE)
(74) Representative: Gevers Patents
(86) International application number: PCT/EP2014/052889
(87) International publication number: WO 2014/128054

(56) References cited:
- EP-A1- 2 218 423
- EP-A1- 2 462 893
- EP-A1- 2 700 377
- EP-A2- 1 920 730
- EP-A2- 2 457 536
- WO-A1-01/34057

## Description

### FIELD OF THE INVENTION

The present invention relates generally to the field of dental implant systems. More particularly, the invention relates to dental implant visualizers or beacons, intended for providing a function similar to what is currently provided by a dental implant scan adapter or dental scan adaptor.

### BACKGROUND OF THE INVENTION

What is currently known as a dental scan adaptor, scan body or scan locator is an essential tool in the preparation and fabrication of a dental prosthesis for a patient who has one or more dental implants fixed into his or her jawbone.

A dental implant is a "root" device, used in dentistry to support restorations that resemble a tooth or group of teeth to replace missing teeth. Dental implants may be used to support a number of dental prostheses, including crowns, implant-supported bridges or dentures. They may also be used as anchorage for orthodontic tooth movement.

A typical dental implant consists of a small titanium screw or root, resembling a tooth root, with either tapered or parallel sides which may have a smooth, but preferably a roughened or surface, and an abutment, which is placed on top of the root. Titanium or titanium alloys are very common materials for dental implants, because of their high rate of acceptance by the human body.

The implant root is placed within the bone, and is supposed to subsequently become integrated with the bone. The natural so-called "osseointegration" process leads to a fusion of the implant surface with the surrounding bone. The head of the implant is usually designed in a manner so that a mechanically highly sound connection may be made with an appropriate and fitting abutment, which shall be carrying the ultimate superstructure. Typically the abutment fits in a non-rotational manner onto the implant head, and is secured with a bolt which is screwed through the abutment into the implant head. This connection should provide little tolerance and an excellent fit, usually combined with a good frictional connection relative to the abutment. This results in various versions of rather complex geometric designs of the implant head, which are difficult to measure with the required accuracy, even by means of the newly evolving intraoral measuring methods. For that reason, the making of a classical impression of the clinical situation remains as the usual intermediate step, needed for collecting the information required for offline preparing the restoring superstructure of the dental prostheses, crown, implant-supported bridge or denture.

The procedure for placing the dental implant typically starts with drilling a pilot hole into the recipient bone. The pilot hole is then later expanded by using progressively wider drills. A major issue in the drilling of the hole for the implant is the care to avoid all the vital structures, in particular the inferior alveolar nerve (IAN) canal and the mental foramen within the mandible (= lower jaw bone), but also the maxillary sinus cavity in the upper jaw. Because every patient is different, prior to commencement of the surgery, careful and detailed planning is required to identify and localise these vital structures, as well as to determine the shape and dimensions of the bone, to properly select the type and desired orientation the implants for the most predictable outcome. Various techniques have been developed in order to improve the success rate of placing implants and to avoid surgical insult of vital structures by the drills or by the implant itself, which may cause irreparable damage. Dental implant success remains however partially related to operator skill.

The type of implant to be selected for placing at a particular place in the mouth of a particular patient, and the orientation of that implant in the jawbone of the patient, is thus very much case dependent and highly dependent on the physical circumstances.

After inserting the implant root, a period of healing and osseointegration is required. If the implant becomes loaded too soon, it is possible that the implant may move, which results in failure. In some cases immediate loading may be possible with special implant types. But in general, practitioners allow the implant to heal for 2-6 months before attaching the final abutment. The typical long time, until the final restoration may eventually be brought in place, is however often a serious deterrent for patients considering implants as a possible alternative to other solutions, in particular when it concerns the so-called "aesthetic" region.

During the healing time, the implant head may be capped with a cover screw, keeping the healing gums or gingiva from entering into the threaded screw hole of the implant head. During the healing process, also a so-called "healing abutment" may be screwed on top of the implant head. This healing abutment avoids that the healing gums would grow over and encloses the implant such that a second surgical treatment would be required before the final abutment and the superstructure may be brought in place.

The fast growing demand for prosthetic solutions based upon dental implants has caused the birth of literally hundreds of different brands and types available on the market. In addition, due to regional differences of life habit, nutrition and oral health, and not at least due to genetic variability of humans which are all reflected by anthropometric differences, the wide variety of bone structures amongst individuals, and various degrees of bone withdrawal, even the same dental implant supplier is obliged to offer a wide variety of implant root designs, sizes and corresponding accessories. The world of implant-based prosthetics is thus characterised by a substantially unlimited variety of offerings and complexity.

On the healed dental implant or dental implant fixture is then placed a so-called abutment, a connecting element, to which subsequently a crown, a bridge, or a removable denture is attached. Such prosthetic implant abutments may be made of a variety of materials, such as titanium, surgical stainless steel, gold, and more recently also zirconia. Prosthetic abutments are typically connected to the dental implant roots via a screw or bolt. The screw or bolt needs to be tightened to a predetermined torque, in order to avoid screw loosening during chewing.

It has been shown that on the one hand the orientation of the dental implant needs to be chosen on a case-by-case basis and depends heavily on underlying bone structure and the location of vital structures, which may not be injured. The orientation of the abutment screwed onto the implant root is on the other hand defined by the inclination of the dental prosthesis to be constructed onto the abutment. It is thus important that the orientation of the abutment may be chosen fully independently from the orientation of the implant. The screw connection, with which the abutment will be connected to the implant, however needs to be in line with the corresponding screw connection element of the implant. In order to accommodate exceptionally inclined implant root orientations, producers may offer different types of abutments for the same implant root, such as for accommodating the exceptionally occurring high inclination angles.

In order to understand the present invention, it is essential to understand that the abutment and the final superstructure may only be prepared after the dental implant has been brought into place in the mouth of the patient and has healed. It is thereby essential that the abutment is accurately adapted to the orientation and the exact depth of the dental implant already in place and integrated into the bone, including the screw connection for connecting to the implant, yet also that the abutment itself is suited to the crown or dental structure that will be built on top of the abutment.

Each implant is for that purpose supplied with an extra element, usually called a dental scan adaptor. The dental scan adaptor has the correct corresponding connection, usually a screw connection, and is shaped such that it may readily be connected correctly onto the implant, fairly regardless of the direction and/or the exact depth at which the implant ended up being implanted into the jawbone. For the more unusual implant positions, specially designed scan adaptors may be provided.

After successful osseointegration, a complex step-by-step procedure has to be followed in order to identify the location and orientation of the implant root. The head of the implant root may need to be freed by surgery when healing has taken place under closed gingiva, which then again requires a second healing period after the extra surgery. In case of open healing with e.g. a so-called healing abutment, which had been screwed on top the implant root, the procedure may often be continued directly. The next step is the capturing of the clinical situation, i.e. detailed three-dimensional information about the surroundings in which the dental restoration is intended for. The clinical situation may be captured directly with an intra-oral scanner or indirectly by the classical method of taking an impression. The latter method is still by far preferred by most dentists for a number of reasons. The accuracy of most current intra-oral scanners is not yet sufficiently high. In case of a very difficult spatial situation in the mouth, the current bulky intra-oral scanners may also not sufficiently reach the region to be captured. Finally but not in the least, it is for most patients a very uncomfortable situation if several scans have to be taken. Each one of these scans may take up to several minutes, during which the patient's mouth should be immobilized.

After taking the impression, the impression itself may be scanned in order to create a virtual model from the negative imprint of the clinical case.

A more frequently used alternative for a mouth or impression scan is that the impression is handed over or sent to a dental lab where technicians prepare a plaster or so-called "dental stone" model from the impression. If the implant root was provided with a suitable abutment when the impression was taken, and this abutment or an exact copy thereof plus a copy of its associated implant root is supplied with the impression, the technician may be able to incorporate into the plaster model the copy of the implant root, and under most circumstances in a position relative to the plaster model which is close to the position of the original implant root relative to the clinical situation of the patient.

The plaster model may then be scanned for constructing the virtual model of the clinical case, as input for the CAD/CAM software for constructing the dental restoration.

In order to also collect information about the spatial vector of the implant root, consisting of its axis of orientation and the position of the root along that axis, all in relation to the clinical situation, a second scan is performed during which the implant root is provided with a so-called "scan adaptor". From this second scan, and in comparison with the scan without the scan adaptor, the vector of the implant may then be determined.

With the modern technological advances afforded by CAD/CAM dentistry, the relevant part of the mount or of the plaster model, including the scan adaptor, may then be scanned in three dimensions (3D-scan), and the fully scanned image of the scan adaptor is then used to reveal the correct depth and orientation of the implant into the underlying structure, the information which is also collectively identified as the "vector" of the implant relative to the other relevant elements in the mouth of the patient.

Such dental scan adaptors are known from various publications.

WO 01/34057 A1 discloses the use of information markers on healing abutments for dental implants. The information markers may be a small number of simple machined notches, even only 2 notches being sometimes sufficient, a numeral, or even a barcode. The information markers are used to enable the identification of particular characteristics about the abutment and/or the underlying implant. Such characteristics may include dimensional information. The disadvantage of this disclosure is that the markers are only information carriers and may bring only dimensional information about one particular object or th assembly of implant with the abutment. The spatial information about the position of the implant in the oral cavity is still lacking and has to be obtained in a different way.

EP 1310217 A2 proposes to use a set of healing abutments. Each healing abutment has unique physical characteristics and a unique binary marking code that indicates those unique physical characteristics. An impression of the mouth is taken with the healing abutment mounted on the implant, and a mould or stone model is created in which the information markers are duplicated. After a 3D scan of this model, or alternatively directly taken from the mouth of the patient, the computer is able to determine from the scanned top surface of the abutment the orientation of the underlying implant and the connection details thereof. The information markers on the top surface are also retrieved from the 3D image, by computer of visual, and allow deriving or directly reading the corresponding 4-digit binary code which permits to obtain from a 4x4 data matrix which from 4 possibilities is the height of the abutment and which from 4 possibilities is the seating surface diameter of the abutment and thus of the implant. The method according to EP 1310217 A2 requires a 3D scan of the healing abutment.

US 2006/0019219 A1 discloses a mounting piece having an upper section containing information, coded by means of different surface areas, the mounting piece and its coding being known to the CAM system and which in a 3D scan allow conclusion about the position and orientation of the implant, and also to detect the type of implant. Also this method requires a 3D scan of the mounting piece.

US 2008/0176188 A1 discloses a method whereby the dental scan adaptors or gauging members are not manufactured with high precision, but have slightly different dimensions. The gauging members can first of all be measured or scanned, with a precision in the range of 5 µm. Two, three or four scanning data sets may be determined, and a user can then select which of those represents the individual shape of the gauging member used. The different gauging members can be provided with an identification, e.g. a number, letter or combination thereof to be able to easily distinguish the individual gauging members from one another. The identifications may be of a type which can be detected during the scanning procedure so that the software identifies the set of data to be used. The part of the gauging member of US 2008/0176188 A1 that is to be scanned in the inserted condition comprises a high number of planar surfaces or has another shape that is easily identifiable. The proposed gauging members further comprise three hemispheres on one surface, an alphanumeric or other identification, such as a barcode, as identification of the gauging member. The coding may be used by a user to input the respective identification into the computer, or may be detected during scanning and be identified by a computer without a manual input. This method thus requires the performing of 3D scan of the gauging member in the inserted condition, or at least a sufficient part to detect and recognize the gauging member and to know the part that mechanically contacts the implant or the implant impression, when retrieved in a set of data provided together with the implant and/or implant impression.

EP 2218423 A1 discloses a scan body with a top end having a scan geometry of which the surface comprises a plurality of plane areas, wherein from every point of view higher than the topmost end of the scan body, there are at least three of the plane areas visible. The plurality of data points obtained from the scanning of the scan body is used to reconstruct at least three planes from the scan body. From the calculated intersections and/or intersection points, the position and orientation of the implant can be determined. According to EP 2218423 A1, a sufficient number of good quality points should be available, and typically between twenty and one hundred points need to be scanned. The scan body of EP 2218423 A1 may in addition comprise a coding associating the scan body with a particular type of implant and/or with a particular type of adaptor piece. The coding is preferably visible from every possible point of view, such that during the scanning procedure, the scan body can be identified by scanning the coding and by being recognized by the user. If the coding is not in a position to be scanned, the coding information may also be obtained "manually", e.g. by a user looking at the coding. The user may look up the corresponding information that is represented by the coding. The drawback of this method is that human intervention is required, which introduces a possibility for errors. A further problem with this method is that it again requires a 3D scan of the adaptor, that a high number of scanning points is required, and that the method is thus rather time consuming. A further problem is that the number of suitable variations of scan bodies remains limited. And additional scan adaptors with such complex geometries need to be manufactured with high precision.

US 2012/0135371 A1 discloses a dental scan adaptor which is provided with an elevated and large 3D-scannable region having an asymmetrical geometry permitting unequivocal detection of its surface from any scanning direction, and by comparison with original data from an electronic image library ascertain very precisely the orientation of the implant, particularly in relation to the gingival, the adjacent teeth, the jaw area, or adjacent dental prosthetic items or implants. Such a scan adaptor with geometric distortions has the drawback that the method requires elaborate calibration of the measuring equipment. A further disadvantage is that the scan adaptor needs to be made with high precision.

WO 2010/097214 A1 discloses two dental implant position locators, the first with male screw thread for use on the model made from the patient's oral cavity of a patient, the second one with female screw thread for use on the dental restoration model. Both locators have a frusto conical portion on top of a cylindrical portion, and at least a portion of the position locator surface is provided with a very homogeneous titanium oxide layer, of a few µm thick within very narrow tolerances and obtained by anodic oxidation, which is dull and has a surface roughness. The dull surfaces are more suited for detection by optical scanners, as the diffuse scattering of the incident light being predominant. The dull surfaces thereby improve the detectability of the position locators by optical scanning apparatuses such as conoscopic holographic scanning, which improves the precision of the scanning data, thereby also of the perceived position and orientation of the underlying dental implant, and hence of the ultimate dental restoration. The position locators may be provided also with surfaces that are not optically dull, and the non treated surfaces may be provided with product markings, colour coding, trademarks, or the like.

WO 2005/084576 A1 discloses the use of a marker element producing a strong contrast when making X-rays, to derive more precisely the position of an implant from a 3D image taken by means of X-rays or magnetic resonance (NMR), preferably a computer tomography (CT) scan.

WO 03/100729 A1 proposes the use of three-dimensional recognition objects having well-defined topography to assist the photogrammetry software to locate automatically these objects within the image field, and to accurately determine the position and orientation of the objects, thus without any human intervention. Also in this method, the exact type of the implant and its connection details need to be entered into the data file by an operator, whereby the possibility for errors remains.

A major disadvantage of all of the above described dental scan adaptors is that their use requires at least one 3D-scan, usually several, of the patients oral cavity, possibly in more than one scan of different portions of the mouth, or of a plaster model made from a mould taken from the patients oral cavity. Such a 3D scan is still rather time consuming. Possibly even more critical is that the information about the location and orientation of the implant has to be retrieved and referenced to very complex geometries of the scan adaptors. Not only the scan itself may introduce further errors due to limited accuracy of the scanners but also the manufacturing method of the adapter has a limited accuracy which may only be increased with high precision methods, which are elaborate and costly. Modern restorations with which multiple single implants are involved or at least two implants are supposed to be carrying a fixed or removable denture restoration, require a very high precision in the determination of the situation of the implanted roots alone and also the distances between them and the spatial relationship relative to each other. For ultimately obtaining high quality clinical solutions, the spatial deviations should remain below 10 or even better below 5 microns, because otherwise tension and pressure may readily lead to inflammation, or even to fracture of the superstructure. Such accuracies are below the capabilities of most 3D scanners currently available in the industry.

Another disadvantage is that in many instances the identity of the underlying implant, as well as its connection details, still has to be obtained from another source, usually by human input, which adds the problem that this procedure remains prone to human error.

A significant problem with the 3D-scan is that the scanning itself is a time consuming procedure. When the mouth of a patient is scanned, the procedure requires the full immobilization of the patient's head or lower jaw relative to the scanning apparatus, during such a long period that it becomes significantly inconvenient to the patient. This long scanning time is one of the prime reasons why the dentist rather prefers to prepare an intermediate plaster model. Another problem is that a plaster model is more readily accessible to the scanner from all sides, while the access for scanning a patient's mouth is much more restricted. The model thus often provides higher quality information for use in the further proceedings.

After the scanning, whether in the mouth or on a model, the technician may then add the exact reference of the implant to the date file, such that the file contains all the information required for designing and constructing the abutment by CAD/CAM. In some of the above proposals, the scan of the adaptor itself may already allow to identify the exact type of the scan adaptor, and hence of the dental implant. The number of possible combinations remained however rather limited.

The problem with the dental scan adaptor techniques as known in the art is that they require an elaborate 3D-scan, which is a time consuming procedure. As stated above, the scanning of a part of the patient's mouth brings such inconveniences that these usually drive the patient and/or the dentist towards the intermediate step of building a plaster model, an additional step which adds significantly more time to the total period that the patient is waiting for the full dental restoration, which usually is particularly disturbing when the restoration is in the so-called "aesthetic" region.

US 5,401,170 discloses a method for dental restoration in which spacers are screwed with their male thread portions into the female thread portions of implanted dental implants. The spaces are provided with a measuring object at their upper end. The upper end of the measuring object may be elliptic, rectangular, triangular or polygonal. In one embodiment of US 5,401,170 a laser beam scanning is carried out in the mouth with the use of an oral-shape measuring device. In another embodiment, each spacer in the mouth is photographed by two cameras, or by a stereo camera. The images are then displayed on a monitor device, and the operator specifies by using an electronic mouse the edge of the measuring object on the pictures, such as a part of the ellipsis. Three points or more may thereby be specified on the upper end of the spacer so as to form a measuring object which has a shape provided by connecting the specified points. On the basis of the shape of the measuring object, the centre and the extending direction of the upper end of the measuring object is measured, so as to lead to the position and direction of the screw hole of the female thread portion of the dental implant. The drawback of the method of US 5,401,170 is that on the one hand the method with the laser beam scanning is time consuming and thus inconvenient to the patient. The photographic method on the other hand requires human intervention to specify the edge of the measuring object and to carry out an edge-find treatment. The precision of the collected information is thus subject to the skill level and accuracy with which the operator has performed the specification. In addition, no information is collected in either methods about the exact type of the implant and its connection details. This information also has to be entered into the data file by an operator, whereby there is always a possibility for making errors.

WO 2008/041943 A1 discloses a measuring device having as few as two measuring objects, with which by using one picture is sufficient to determine the angle and position of the underlying implant. The exact type of the implant and its connection details are not available from the measuring device or its picture, and need to be entered into the data file by an operator, whereby the possibility for errors remains

The object of the present invention is to significantly shorten the "scanning" time for dental restoration, such that not only the work of the dental technician who works from a plaster or stone model may be shortened, but even more that the visual information which is required to be taken from the mouth of a patient in order to design and manufacture the dental abutment may be simplified and be collected much more rapidly and simply. This may result in reducing the threshold for selecting the procedure without the intermediate plaster model, and consequently may reduce significantly the total period that the patient is waiting for the full dental restoration.

The present invention aims to obviate or at least mitigate the above described problem and/or to provide improvements generally.

### SUMMARY OF THE INVENTION

According to the invention, there is provided a kit in parts comprising a data file and a dental implant visualiser, a set of at least two such dental implant visualisers, a method for preparing a dental prosthesis involving such kit in parts, a dental implant visualiser and its use, as defined in any of the accompanying claims.

In an embodiment, the invention provides a kit in parts as defined in Claim 1.

Within the context of the present invention, the data file part of the kit in parts may be present on a physical carrier, but may also be stored on a remote information carrier which may be made accessible via a wide variety of electronic means known in the art, via hardware connections, wireless connections, public and or private data paths, and the like. The connection to the data file or the access capability may be provided to a device which is collecting the spatial information from the electromagnetic recognition technique. In other words, the kit in parts according to the present invention does not need to be physically complete and present in one and the same location.

In yet another embodiment, the invention provides a method for preparing and installing a dental prosthesis, as defined in claim 9, comprising
(a) providing a kit in parts as defined in any one of the preceding claims,
(b) after the implantation into a patient bone of the predetermined dental implant root which corresponds to the visualiser, properly connecting the visualiser to an element selected from the abutment corresponding to the predetermined implant root which was incorporated into an impression of the clinical situation taken from the patient, and an analogue of the predetermined implant root which was incorporated into a model of the clinical situation derived from an impression taken from the patient,
(c) while the visualiser is properly connected, using an electromagnetic recognition technique, which technique is applied from at least one observation point, recognising the markers on the visualiser, obtaining the spatial information of the geometric pattern formed by the markers, and
(d) retrieving the spatial information of the geometric pattern in the data file together with information determining the axis of orientation of the implant root and the position of the top of the implant along the axis of orientation, relative to the visualiser, and also identifying the visualiser and the predetermined implant root.

In the present invention, the visualiser is an important and essential part of the kit in parts. Thanks to the features of the visualiser, the kit in parts according to the present invention is able to achieve its effects which are discussed herein below.

The present invention therefore provides a visualiser for a dental implant root comprising
a) on one side of the body of the visualiser a mechanical connection part suitable for connecting to a collaborating connection part provided on an element selected from the group consisting of a predetermined implant root and an abutment corresponding to the predetermined implant root, whereby, when properly connected, the connection is defining, relative to the visualiser, the axis of orientation of the implant root and the position of the top of the implant root along the axis of orientation, and
b) as part of the body of the visualiser at least three markers, which contrast under electromagnetic radiation with their surroundings, the markers being observable and recognizable by an electromagnetic recognition technique applied from at least one observation point, whereby the markers on the visualiser define a geometric pattern, of which the electromagnetic recognition technique is capable of collecting the spatial information, and whereby the markers on the visualiser define a geometric pattern which may be recognized by the recognition technique, and which, by reference to a data file comprising the geometric pattern, allows to determine the axis of orientation of the implant root and the position of the top of the implant root along the axis of orientation, relative to the pattern, and also identifying the visualiser and the predetermined implant root.

The present invention provides for the use of the visualiser according to the present invention for obtaining spatial information relating to the vector of a dental implant root.

The advantage of the present invention is that with a very fast and simple technique, both identity information and spatial information about the visualiser and its underlying dental implant may be collected. A further advantage is that the visualiser according to the present invention is in fact nothing more than a solid carrier for the at least three markers. This strongly limits the number of requirements which are imposed upon its geometry, shape, dimensions and construction materials, unlike its equivalents known in the art.

The inventors have found that obtaining the spatial information about only three, preferably four and more preferably five markers may be sufficient in the preparation of a dental restoration based on a dental implant. This allows simplifying the process and reducing the time for completing the dental restoration. The simplified and shorter process may also allow more patients to select this implant-based process of dental restoration over its alternatives, which typically involve a partial destruction of healthy dental structures in order to provide support for the ultimate dental superstructure. The selection of the implant-based process may thus allow preserving more of the existing healthy dental structures intact. On the other hand, the implant-based technique provides a dental structure which remains easier to maintain and has a longer life expectancy of most of its alternatives at the same or lower costs and patient inconveniences.

The inventors have furthermore found that the present invention is fairly independent from the geometrical shape, the constructing material, the nature of the visualiser, and the precision with which the visualiser is manufactured. This brings the advantage that the visualiser may be produced by a variety of manufacturing methods, which may be much simpler and faster as compared to those for manufacturing the dental scan adaptors available in the art.

The inventors have found that the visualiser according to the present invention, upon properly being connected to the dental implant, may readily be visualised by currently known and possibly simple spatial visualisation techniques, and this in a very short elapsed time but yet providing sufficient precision, such that sufficient information becomes available of the exact vector location of the implant root, but also about the type of the implant and its root, i.e. including the exact details about the connection for connecting the abutment thereto.

The inventors have found that the visualiser according to the present invention, upon properly being connected to the dental implant, may readily enable visualisation by current intra-oral cameras or any currently known simple two-dimensional visualisation technique, and this in a very short elapsed time yet with sufficient accuracy, relative to the adjacent teeth and the surrounding gingiva, such that sufficient information becomes available, of the vector of the implant, but also the correct information about the exact type of the implant, i.e. including the exact details about the connection for connecting the abutment thereto.

The inventors have found in the method applied according to the present invention the visualiser does not need to be fully scanned in 3D, such as when the clinical situation is retrieved, as is the case with the scan adaptors known in the art. The present invention therefore enables intra-oral scanning in a very practical manner, because much simpler and shorter 3D or even a plurality of 2D-visualisation techniques may be sufficient to collect the necessary information about the orientation and position of the underlying implant, and of the identity of the implant or implant type, as these may be retrieved on the basis of the pattern from an appropriate database.

The inventors have found that the visualisers according to the present invention allow that also simple photogrammetric techniques may be used to recognize the markers. This brings the advantage that the present invention does not necessarily need the conventional 3D techniques for obtaining the information required about the implant root. This provides the highest conceivable flexibility in selecting the recognition method, as well as in selecting the placement of the markers on the visualiser, as well as the suitability of almost any kind of visualiser which subsequently may be referenced with the implant type and the vector of the implant root.

A further advantage is that the present invention does not limit the visualiser in any more than as a well-defined carrier of the markers. This brings the advantage that the visualiser may have any shape and type, and that its construction materials may be chosen from a wide selection. In essence, the visualiser is not more than a properly connected carrier of information, which is provided by the markers.

The inventors have found that, in the method according to the present invention, the time required for collecting the necessary spatial information may be reduced from the conventional period of 15-25 minutes down to a period of 1-10 seconds, preferably at most 7 seconds, more preferably at most 5 seconds and even more preferably at most 4 seconds.

The inventors have further found that the method according to the present invention is particularly advantageous in the context of a plurality of implants in the same clinical situation. The inventors have found that the collection time may not necessarily increase when more than one implant is involved at the same time. The inventors have found that a total number of 10 implant roots, each having its own position and orientation, in total was leading to a average time of at most 0.7, preferably at most 0.5 and most preferably at most 0.4 seconds per implant root.

This effect is obtained because the pattern obtained from observing, recognising and locating the markers and its geometric pattern may uniquely be connected to a set of data comprising sufficiently precise spatial positioning information about the vector of the implant root relative to the pattern, and information about the exact type of the implant and its root, which usually also makes available the details about its connection part intended for connecting another element such as the abutment.

Because also the type of the implant is determined from the pattern formed by the markers, this brings the additional advantage that this information is directly made available and does not need to be introduced by an operator, whereby the possibility for errors is significantly reduced, in addition to the time gain associated with the automated collection of this information.

The inventors have additionally found that the precision of the electromagnetic recognition techniques currently available in the art allow differentiating between patterns by having only one distance between two markers which differ by only a very small difference. It was found that even the more simple recognition techniques are able to differentiate between distances which differ by not more than 50 micrometer (µm), preferably not more than 25 µm, more preferably not more than 10 µm, and often not more than 6 µm. The inventors have found that this precision allows a high accuracy in retrieving the correct record from the data file, and to readily reject records which have a close similarity with the observed pattern but which relate to a different pattern. We have found that a high number of different patterns may be defined with simple patterns and using simple markers.

The inventors have found that the visualisers may be used without any further surface treatments, such as those which may be necessary with conventional scan adaptors. The conventional scan adaptors often need to be sprayed with a temporary or fixed layer having diffuse reflectance, in order to prevent optical disturbing effects and to capture data having acceptable quality.

All these obtained effects bring the advantage of a collection of the comprehensive necessary spatial and identity information in a very short period of time, such as less than 10 seconds, thus providing a much faster acquisition of accurate as well as complete information.

The inventors have found that the present invention as defined herein is significantly different from the disclosures found in state of the art, and that the prior art does not lead to the same technical effects as discussed herein above.

In WO 01/134057 A1 the information markers are only supposed to provide a means to identity information, which may possibly lead to some dimensional information about the abutment, the implant, or the assembly thereof. Any spatial information is collected by different means, such as a 3D scan. The spatial information about the implant may be derived using the dimensional information retrieved once the object has been identified, but in combination with the spatial information that is to be collected of the abutment, not this of the information markers. The information markers in WO 01/134057 are not suitable for providing spatial information with the precision required for the purpose of developing a dental prosthesis.

US 2008/0176188 A1 discloses a method where two, three or four 3D scanning data sets may be determined by scanning or measuring a gauging member. A user may then select which of those data sets represents the individual shape of the gauging member that was used. Different gauging members are given different dimensions and may be provided with an identification code which may provide further dimensional information from a database. In this method, a 3D scan is still necessary to obtain the spatial information of the gauging member.

EP 2218423 A1 discloses a scan body allowing the collection of a plurality of data points. A large number of points need to be scanned in order to reconstruct planes from the scan body. An absolute minimum number of 9 points is required, consisting of at least 3 points positioned on at least 3 different planes on the scan body. The more points which are taken, the higher the accuracy of the information obtained but also the longer the time needed to perform the scan, hence the number should be less than ten thousand, preferably less than one thousand. The points are part of an array of points taken to scan the surface of the scan body. From these points the planes are reconstructed, intersection lines and points are determined, and at least a part of the scan body geometry may be virtually reconstructed as a virtual model. The virtual model is then compared with a data base of scan bodies, and the identity of the scan body and the dimensional information of its assembly with the implant may be obtained. The fewer the points, the less number of different scan bodies may be recognised and hence provided. If one wants a wide variety of implants and associated scan bodies, this method still requires a high number of points and hence each time a very time consuming 3D scan. The present invention requires only a low number of markers, of which the 3D spatial information is obtainable with a much simpler and faster technique than with a 3D scan.

US 2012/0135371 A1 refers to a dental scan adaptor provided with an elevated and large 3D-scannable region, permitting detection of its surface by comparison with original data from an electronic image library. This method requires elaborate calibration of the measuring equipment and high precision in manufacturing the scan adaptors, whereas the present invention as defined here only requires pre-calibration, and the shape of the visualiser itself is of little importance. Only the pattern defined by the markers needs to be accurately defined.

### BRIEF DESCRIPTION OF THE DRAWINGS

Figure 1 shows a perspective view of a visualiser according to one preferred embodiment according to the present invention.
Figure 2 shows a cross-section view of the visualiser of Figure 1.
Figure 3 shows a perspective view of a set of the visualisers of Figures 1 and 2 immediately after they have been provided with markers.

### DETAILED DESCRIPTION

The present invention will be described in the following with respect to particular embodiments and with reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Within the context of the present invention, angles and cone apertures are expressed relative to the system defining a full circle as 360°.

Within the context of the present invention, a Cartesian coordinate system is considered identical to an orthogonal coordinate system, both of them describing a reference system consisting or orthogonal X, Y and Z-axes relative to which a point in space may be given three coordinates.

Within the context of the present invention, a marker is understood to comprise any 2D or 3D geometrical object which is able to define one predetermined reference point of which the coordinates may be determined. The variety of suitable markers is substantially unlimited. The preferred markers have a regular geometric shape, because the predetermined reference point of the marker may readily be defined, or may even be intuitive. A suitable marker may for instance be an equal sided triangle, a square, a rectangle, a circle, or a regular polygon, of which for instance the centre point may be considered the predetermined reference point. A suitable marker may also be a segment of a line, of which the middle point may be considered the predetermined reference point. A suitable 3D marker may for instance be a sphere, a hemisphere, or a cube, of which the centre point may then be considered the predetermined reference point. The applicants have found that the size and shape of the marker may differ between very wide ranges, and that differently shaped and/or sized markers may be used as part of the same pattern. The applicants have found that the contrast of a marker with its surrounding may be further enhanced by adding a strongly contrasting rim around the marker.

Within the context of the present invention, pre-calibration is understood to mean the recognition process, including the result thereof, of the electromagnetic recognition technique being applied to a visualiser connected to a given type of implant connection in a non-clinical situation in order to obtain all information needed to retrieve the implant position and orientation from the pattern formed by the markers as part of the visualiser. The information collected as such forms the reference information in the process of referring the visualiser pattern to an implant type or an equivalent in a clinical situation presented interorally, by an implant analogue in a plaster model or by a corresponding abutment in an impression made from the clinical situation. By recognition of the pattern, and retrieving the pattern in the data file, also called "the pre-calibrated library", the identity of the associated visualiser and implant type may be retrieved. As such, the set of markers as part of the visualiser may directly be related to the implant type and position. The applicants prefer that the pre-calibration technique makes use of a reference point which is spatially well defined within the three-dimensional coordinate system which is preferably predefined, or so-called "pre-calibrated", into the recognition technique.

In the context of the present invention, the "vector" of a dental implant or implant root is defined as the spatial information which in the first place defines the axis of orientation of the dental implant root. The vector also comprises the position of the top of the dental implant root along this axis of orientation. Thereby is the top defined as the plane which delimits the height of the implant root. More specifically, the position of the top of the implant root is defined as the point where this delimiting plane crosses the axis of orientation of the dental implant root.

The inventors prefer that the dental prosthesis is produced by using a CAD/CAM system. Such systems are able to provide a high quality and accuracy of the final dental prosthesis, due to automated processes. Additionally, they provide to the technician the highest possible flexibility in the choice of the materials to be used for the superstructure. They bring the further advantage that multiple prostheses may be manufactured in parallel, all with the same precision, which brings a significant increase in efficiency.

Within the context of the present invention a wide variety of suitable electromagnetic recognition techniques may be used. These techniques may also be called imaging techniques. In order to be suitable in the context of the present invention, it is however very important, for instance by using two different observation points or a stereo camera technique, that spatial information may be collected of the recognizable markers on the body of the visualiser.

Suitable stereographic imaging techniques are for instance described in US 2003/0058456 A1 and EP 2136334 A2, including the discussion of the related art.

Suitable 3D measuring apparatuses and corresponding CAD/CAM methods are for instance disclosed in JP 2002-336277, JP 2006-126004, US 5,338,198, US 5,851,115, and EP 1310217 A2. The quality of the produced prosthesis may be further improved by applying the teaching from EP 2204138 A1.

In an embodiment of the kit in parts according to the present invention, the visualiser comprises at least four markers and preferably at least five markers which are observable and recognizable from the at least one observation point. The inventors have found that a higher number of markers provides for a wider variety of patterns, which may more readily be made distinguishable from each other and hence unique as part of the pre-calibration library which is comprised in the data file according to the present invention.

In an embodiment of the kit in parts according to the present invention, the markers are located on a single substantially flat surface of the visualiser body, preferably the plane comprising the flat surface being substantially perpendicular to the axis of orientation of the dental implant. The applicants have found that this feature provides for a very easy manufacturing method of the visualiser and for applying the markers onto the visualiser. In addition, this feature provides for easy observation and recognition of the markers, and hence the pattern, from a wide range of observation points. The observation point may almost be located anywhere in the hemisphere above the flat surface of the visualiser, or at least in a cone

In an embodiment of the kit in parts according to the present invention, the markers are defined by a regular geometric figure in contrast with the surroundings, preferably a regular geometric 2-dimensional figure in contrast with the surrounding surface. The applicants have found that this provides for an easy way of defining a standard or reference point of the marker of which the coordinates may be determined.

In an embodiment of the kit in parts according to the present invention, the markers comprise a first circle contrasting with the surrounding surface, preferably the first circle being inside a substantially concentric second circle which strongly contrasts with the first circle, preferably the colours of the first and the second circle being respectively white and black, preferably the inner circle being white and the outer circle being black. The applicants have found that the contrast of the marker with its surroundings may be enhanced by giving the marker rim which is strongly contrasting with the centre of the marker.

In an embodiment of the kit in parts according to the present invention, the markers are printed onto the visualiser body. In another embodiment, the markers are laser engraved into the visualiser body. The applicants have found that these techniques are readily applicable to most types of visualisers, fast and economical. In another embodiment, the visualiser may be of a material which is transparent for the electromagnetic radiation and the markers are printed into the transparent visualiser by a holographic technique.

In an embodiment of the kit in parts according to the present invention, the mechanical connection parts form a non-rotational connection, preferably a connection selected from a polygon connection, preferably a hexagonal connection, more preferably an external hexagonal connection, an internal conical connection, and an internal tri-channel connection. This brings the advantage that the visualiser, once connected, may not term anymore relative to the structure to which it is connected. This avoids possible problems which may otherwise arise with respect to the spatial information of the underlying structure which is provided indirectly by the pattern on the visualiser.

In an embodiment of the kit in parts according to the present invention, the connection parts comprise an element selected from a screw, a bolt, and a dowel, whereby with a dowel or bayonet fitting preferably the dowel is elastic and the connection may be further secured by placing or pushing an insert into the dowel. The applicants find that the described connection parts are readily available, intuitive to the user, and easy to work with.

In an embodiment of the kit in parts according to the present invention, the mechanical connection parts are provided for connecting the bottom of the visualiser to the top of the implant root. The applicants found such setup very convenient to work with.

In an embodiment of the kit in parts according to the present invention, the connection between the visualiser and the implant root is a screw connection, preferably a single screw connection, more preferably the connection part on the implant root being the female screw thread part of the screw connection, preferably the visualiser having a bore for passing a bolt and for screwing the bolt into the implant root. The applicants found that such a connection is easy, convenient, and readily understandable and workable for the user.

In an embodiment of the kit in parts according to the present invention, the visualiser has a shape and size which is smaller than those of the undamaged tooth which is to be restored on the basis of the implant root. This brings the advantage that a visualiser may readily be connected to an implant adjacent to a healthy tooth, of two visualisers may be present at the same time, connected to implants for adjacent teeth. This allows for obtaining simultaneously the spatial information about two or even more implants with the same operation of the recognition technique. As the spatial information of each implant does not need to be collected separately, the elapsed time for collecting the information may be further shortened in complex cases, which may add to the comfort of the patient, and reduce the threshold for selecting the implant-based restoration technique as compared to the other techniques, whereby more healthy tooth material may be left intact.

In an embodiment of the kit in parts according to the present invention, the visualiser body is symmetrical around the axis of orientation of the predetermined implant root. The applicants are finding such feature very convenient. It assures that connecting the visualiser is unlikely to be disturbed or impaired by other elements present in the clinical situation, such as healthy teeth.

In an embodiment of the kit in parts according to the present invention, the dental implant root is an integrated part of a one-piece dental implant, i.e. wherein the abutment and the implant root are integrated with each other. Some clinical cases may allow for the use of a one-piece dental implant. In the case of a one-piece dental implant, the visualiser may be connecting to the abutment. One possible embodiment is that the visualiser has a female connection part for connecting to a male connection part provided on the one-piece implant-abutment structure, preferably on the top thereof.

In an embodiment of the kit in parts according to the present invention, the abutment is the visualiser. The abutment itself may be the visualiser, and may thus be provided with markers defining a pattern. This feature is particularly handy with a one-piece dental implant.

In an embodiment of the kit in parts according to the present invention, the visualiser body is substantially transparent for the electromagnetic radiation used by the electromagnetic recognition technique. This brings the advantage that the markers may be recognizable from many more observation points, even from the other side of the visualiser body. This brings the advantage that the markers may more readily be observed and recognised by the recognition technique, and that more readily the full pattern may be observed, such that the pattern may more readily be retrieved from the data file.

In an embodiment of the kit in parts according to the present invention, the visualiser body is made from plastic, preferably from a plastic selected from a recyclable plastic, a biodegradable plastic, and combinations thereof. The visualisers are more advantageously made from a thermoplastic material. The visualisers may readily be made by any plastic transformation technique, such as injection moulding. The visualisers may also be readily disposable after use, recyclable and/or because of biodegradability being environmentally friendly. As a thermoplastic body, they may be readily acceptable in the disposal and/or destruction techniques for medical waste.

In another embodiment, the visualiser according to the present invention is made of a metallic material. Suitable metallic materials are for instance steel, stainless steel or titanium, and combinations thereof.

In an embodiment of the kit in parts according to the present invention, the electromagnetic recognition technique is selected from the group consisting of magnetic resonance imaging (MRI), stereographic photography, the taking of at least two pictures by two cameras from different observation points, the taking of at least two pictures by the same camera from two different observation points, 3D scanning, whereby the 3D scanning may use light selected from white light, coloured light, X-rays, structured light, and laser light, and the 3D scanning technique may optionally use a light mask, photogrammetry, and combinations thereof.

In an embodiment of the kit in parts according to the present invention, the electromagnetic recognition technique is based on X-rays, preferably the visualiser being substantially transparent to X-rays and the markers not. The applicants have found that this technique is most convenient for directly obtaining the necessary spatial information from the clinical case, i.e. from the patient. In that context, the present invention may be integrated with other X-ray observation techniques familiar to and frequently used by dentists and dental surgeons.

In an embodiment according to the present invention the kit in parts comprises a set of at least two dental implant visualisers, whereby the patterns defined by the individual sets of markers are different and unique for each of the visualisers.

In an embodiment according to the present invention the kit in parts further comprises at least one specimen of the predetermined dental implant root.

In an embodiment according to the present invention the kit in parts further comprises an abutment which fits onto the predetermined dental implant root, and when appropriate the corresponding bolt for attaching the abutment to the dental implant root.

In an embodiment according to the present invention the kit in parts further comprises at least one element selected from the group consisting of an abutment corresponding to the predetermined implant root, a healing abutment, a healing abutment bridge, an immediate temporary abutment, a temporary abutment, an aesthetic abutment, a multi-unit abutment, one or more clinical or laboratory screws, a screw tap, a screw driver, a cover screw driver, a torque wrench, a wrench adaptor, an impression coping, an implant replica, a coping, a healing cap, a drill, a pilot drill, a bur, a twist drill, a twist step drill, a precision drill, a drill guide, a drill stop, a guided drill, a drill extension shaft, a counterbore, a screw tap, an implant driver, a cover screw, a bone mill, a depth probe, and a direction indicator.

In an embodiment according to the present invention the kit in parts comprises at least two visualisers and their corresponding implant roots, whereby the patterns of the visualisers are different, and distinguishable by the electromagnetic recognition technique.

In an embodiment according to the present invention the kit in parts comprises at least two dental implant visualisers with screw thread connections whereby the screw thread connections have a different screw thread gender or diameter.

In an embodiment of the kit in parts according to the present invention, the markers are located on the surface of the body of the visualiser and contrast with their surrounding surface.

In an embodiment of the kit in parts according to the present invention, the electromagnetic recognition technique is applied from at least one observation point inside the volume of a cone around the axis of orientation of the implant root, the apex of the cone being defined by the position of the top of the dental implant root along the axis of orientation relative to the visualiser and the cone being directed away from the side of the body having the mechanical connection, whereby the cone has an aperture of at least 30° and at most 120°.

In an embodiment of the kit in parts according to the present invention, the spatial information of the geometric pattern which is comprised in the data file comprises the coordinates of the markers relative to a first, typically in a non-clinical situation, three dimensional coordinate system, preferably a Cartesian or orthogonal coordinate system.

The markers are suitable for the recognition technique to collect the coordinates of the markers relative to a second, now preferably in the clinical situation, three dimensional coordinate system, preferably a Cartesian or orthogonal coordinate system, preferably the second three dimensional coordinate system being pre-calibrated into the recognition technique, more preferably by during the observation of the markers also recognizing a reference point of which the spatial information has been predefined.

The geometric pattern is recognisable by determining the number of markers and the second (clinical) set of coordinates of these markers, calculating the second (clinical) set of distances between all the individual markers observed and recognized as being markers of the pattern, and recognizing the pattern by retrieving a record in the data file which comprises a first (non-clinical) set of marker coordinates which result in a first (non-clinical) set of distances between the markers which corresponds to the second (clinical) set of distances within a deviation for each distance of at most 50 micrometer (µm), preferably at most 25 µm, more preferably at most 15 µm, even more preferably at most 10 µm, yet more preferably at most 8 urn, preferably at most 6 µm, more preferably at most 5 µm, even more preferably at most 4 µm.

In an embodiment of the kit in parts according to the present invention, the data file is available electronically, preferably by means of a physical data carrier, more preferably the data file being made available via a remote electronic connection to a data base, even more preferably through the internet. The advantage of this feature is easy and ready access to the data file, and in the preferred embodiments an assurance of data integrity.

In an embodiment, the method according to the present invention further comprises attaching an abutment to the implant root.

In an embodiment, the method further comprises the step of attaching the prosthesis to the implant root.

In an embodiment of the method according to the present invention, the spatial information of the geometric pattern is obtained by determining the coordinates of each of the markers relative to a second (clinical) three-dimensional coordinate system.

In an embodiment of the method according to the present invention, the second (clinical) three-dimensional coordinate system is pre-calibrated into the electromagnetic recognition technique. This may for instance be done by placing a suitably marked up plate in the observation area, and applying the technique to that plate, whereby the markings on the plate are recognised by the technique and used for defining a three-dimensional coordinate system, such as defining an orthogonal X-Y-Z axis system, which is then stored in memory for further reference by the technique.

In an embodiment of the method according to the present invention, the coordinates of the at least one observation point relative to the second (clinical) three-dimensional coordinate system are known and used in determining the coordinates of each of the markers relative to the same (clinical) coordinate system.

In an embodiment of the method according to the present invention, the recognition technique also observes and recognizes at least one reference point having known coordinates relative to the second (clinical) three-dimensional coordinate system.

In an embodiment of the method according to the present invention, the data file comprises the coordinates of the markers relative to a first (non-clinical) three-dimensional coordinate system.

In an embodiment of the method according to the present invention, the coordinates of the markers relative to the first (non-clinical) three-dimensional coordinate system are obtained with the visualiser properly connected with its mechanical connection part to a collaborating connection part which is identical to the collaborating connection part selected from the group consisting of a predetermined implant root and an abutment corresponding to the predetermined implant root, whereby, when properly connected, the connection is defining, relative to the visualiser, the axis of orientation of the implant root and the position of the top of the implant root along the axis of orientation.

In an embodiment, the method according to the present invention further comprises the step of applying the markers to the visualiser, preferably by placing the markers on the surface of the visualiser.

In an embodiment of the method according to the present invention, the markers are applied according to a predefined pattern contained in a data file comprising a plurality of patterns and whereby the set of distances between the marker coordinates for each of the patterns differs from the other sets present in the data file by a deviation of at least one of the distances by at least 4 µm, preferably at least 5 µm, more preferably at least 6 µm, even more preferably at least 8 urn, yet more preferably at least 10 µm, preferably at least 15 µm, more preferably at least 20 µm, even more preferably at least 25 µm and yet more preferably at least 50 µm.

In an embodiment, the method according to the present invention further comprises the step of preparing a set of at least two dental implant visualisers, preferably at least 5, more preferably at least 10, even more preferably at least 20, yet more preferably at least 50 visualisers, preferably at least 100 visualisers, more preferably at least 500 visualisers, even more preferably at least 1000 visualisers, yet more preferably at least 5000 visualisers.

In an embodiment of the method according to the present invention, the precalibration of the set of visualisers is used in the construction of the data file.

The present invention is further illustrated by the enclosed drawings.

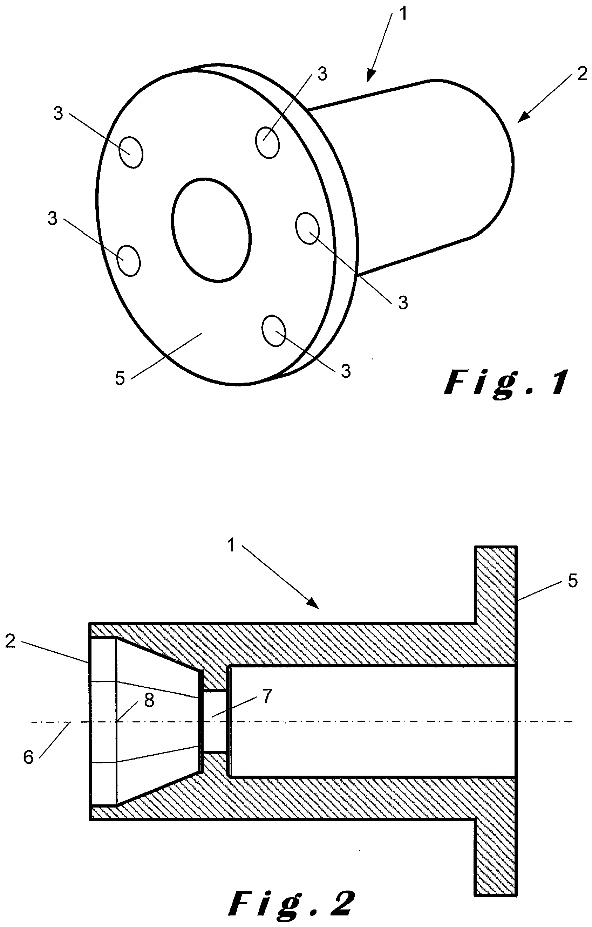

Figure 1 shows a perspective view of a visualiser according to one preferred embodiment according to the present invention. In more detail, the visualiser 1 has a generally cylindrical shape with an enlarged head at its top end. At the bottom end is the mechanical connection part 2 for connecting to a collaborating connection part 4 which is provided on the implant root or abutment (not shown). The enlarged head of the visualiser provides for a flat top surface 5, on which five markers 3 have been engraved by laser engraving.

Figure 2 shows a cross-section view of the visualiser of Figure 1. In Figure 2, the top surface 5 of the head of the visualiser 1 is also indicated. Also shown is the axis of symmetry of the visualiser, which will coincide with the axis of orientation of the implant root 6 when the visualiser is connected thereto. Further shown is the mechanical connection part 2, at the bottom end of the visualiser. The connection part 2 is hexagonal in shape, and the hexagonal shape tapers towards the central bore 7 through which a bolt (not shown) may be entered and for instance be screwed into the top of the implant root (not shown). The hexagonal connection part 2 is female and allows for entry of a hexagonal male protrusion, for instance on the implant root, into the visualiser, such that the connection is non-rotational. The male protrusion enters up to point 8, which then indicates the top of the implant root along the axis of orientation 6.

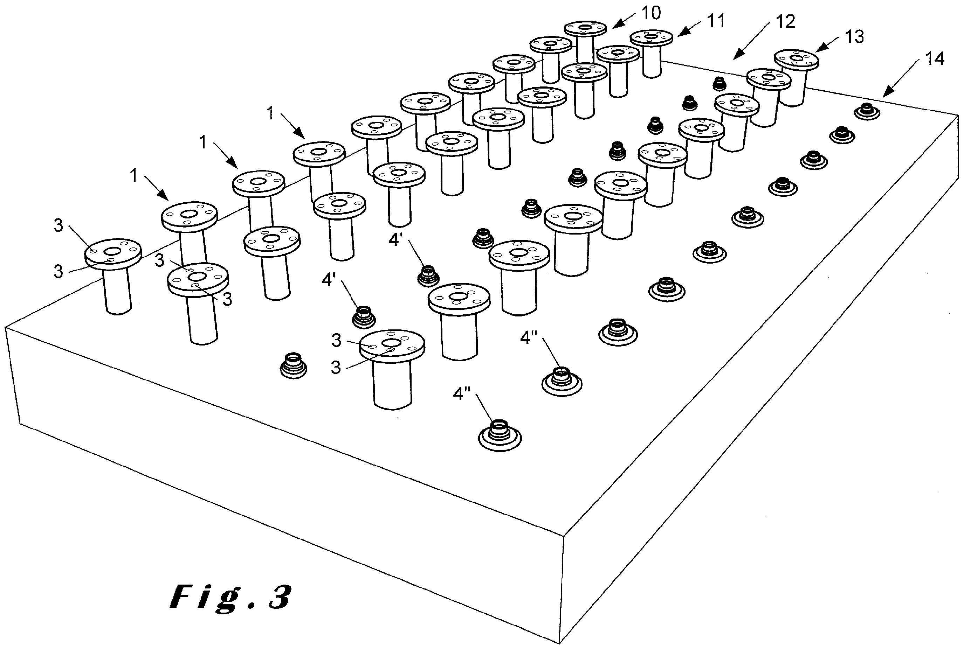

Figure 3 shows a perspective view of a set of the visualisers of Figures 1 and 2 immediately after they have been provided with markers. Figure 3 shows a flat plate into which are provided different types of analogues 4' and 4" of the connection parts 4 which are provided on different types of instance implant roots (not shown). The connection parts are in Figure 3 provided in rows 10, 11, 12, 13 and 14, and in this drawing are identical per row, but different between the rows. Visualisers 1 have been connected to the connection parts, for instance by screwing a bolt through the central bore of the visualiser into the connection parts such as 4' and 4". Visualisers are shown for rows 10, 11 and 13. No visualisers are shown for rows 12 and 14, such that the connection parts 4' and 4" for these rows could be shown. Subsequently to connecting the visualisers, the visualisers have been provided with markers 3. The markers 3 define each time a pattern on the top surface of each visualiser. The visualisers of row 10 have been provided with 4 markers each, each time defining the same pattern. The visualisers of rows 11 and 13 have been provided with 5 markers each. The patterns which are defined for row 11 are different from the patterns that are defined for row 13.

Now that the invention is explained in all its details, the present invention is further illustrated by the following examples, without wishing that the scope of protection should be limited to those examples.

### EXAMPLES

### The pre-calibration step:

In a plate a matrix of 5 x 10 dental implant root connection part analogues are placed, as shown in Figure 3. The connection parts may all be the same, but preferably differ in order to reflect a portion of the wide variety of connections for implant roots, their analogues, and for their corresponding abutments. For each position, the type of connection, as well as the axis of orientation of the implant root, are well defined relative to the plate.

To each one of the implant root connection parts is properly connected a corresponding visualiser, as shown in Figure 3 for three rows. All the visualisers in this example have a cylindrical shape with a flat head which extends cylindrically beyond the size of the cylindrical shape of the visualiser. Such a visualiser is shown in more detail in Figures 1 and 2. On the flat head of each visualiser are subsequently placed the markers. The markers may form the same pattern for implant connection parts which are the same, but should be different when the connection type is different and unique amongst the patterns placed on the visualisers. The markers themselves are formed by small circles, of which in this case the contour contrasts with the rest of the top surface.

Using a 3D scanner IScan D101, available from Imetric 3D GmbH (CH), the following information is collected in a pre-calibration step, all relative to a pre-calibrated Cartesian or orthogonal coordinate system, and stored in the pre-calibration library, also known as the data file:
(i) for each marker, the coordinates of the reference point of the marker, in this case the centre point of the circle,
(ii) for each visualiser, the coordinates of the markers which define the pattern, relative to the coordinate system of the spatial measurement technique, whereby in this case one of the corners of the plate is used as the reference point,
(iii) for each visualiser, the manufacturer and type of the implant root corresponding to the connection part analogue to which the visualiser is attached to,
(iv) for each visualiser the position of the markers relative to the axis of orientation of the implant root corresponding to the connection part analogue, and the position of the top of the implant root along the axis of orientation.

The result of this pre-calibration step is a data file which contains, for each visualiser and associated pattern, a set of a defined number of marker coordinates relative to the coordinate system of the pre-calibration step, the axis of orientation of the corresponding implant root, and the position of the top of the implant along this axis of orientation, and the manufacturer and type of the corresponding implant root. There may be added extra information, such as e.g. more details about the type of visualiser if several types of visualisers are being used, and the like.

### The clinical step:

The clinical situation is that one of the implant roots selected from the pre-calibrated set has been implanted into a patient's lower or upper jaw bone. This step is not part of the claimed method.

### The optional dental stone model intermediate:

In this case, an impression has been made of the clinical situation with the implant roots in place and with an abutment attached thereto. Subsequently a dental technician produced a gypsum, plaster or "dental stone" model of the clinical situation, in which for each implant root an analogue of the respective implant root was introduced in the same location relative to model as compared to how the implant root was positioned relative to the clinical situation.

### Collecting the input for the CAD/CAM software.

First a full 3D-scan of the stone model, without any visualiser or abutment and thus with only the implant roots present as foreign elements is made. This establishes the environment for the CAD/CAM process.

Secondly, the respective visualisers are properly connected to the corresponding dental implant root analogue(s) which are part of the gypsum model. The visualisers are sufficiently small such that also implant roots for adjacent teeth may be provided with their corresponding implants at the same time. When more than one implant root is to be configured, it is preferred that the implant root connection parts are different such that any confusion about which visualiser has to be fitted onto what connection part is avoided.

Subsequently, the model with the visualisers in place is 3D-imaged by another IScan D101 apparatus, in which another Cartesian or orthogonal coordinate system has been pre-calibrated. This imaging takes less than 1 second for collecting the necessary information. By the information collected by the 3D-imaging relative to the pre-calibrated coordinate system, the observed markers are recognised, and the coordinates of the reference points of all the recognised markers on the visualisers are determined relative to the coordinate system.

The recognition technique further calculates the set of distances between all the reference points of the markers recognised, establishing a second set of pattern distances.

The recognition technique subsequently searches in the data file for a record of which the stored marker coordinates provide a first set of pattern distances which comprises the second set of pattern distances. If no record complies, or if more than one record complies with this condition, the user is signalled that no match has been identified. This may signal that a different data file should be consulted, or that an insufficient number of marker points was recognised in order to identify a unique pattern from the data file.

In case of a unique match, the data file provides all the details required by the CAD/CAM software allowing the development of the dental restoration.

Having now fully described the invention, it will be appreciated by those skilled in the art that the invention may be performed within a wide range of parameters within what is claimed, without departing from the scope of the invention, which is defined by the claims.

## Claims

1. A kit in parts comprising
(i) a visualiser (1) for a dental implant root, the visualiser comprising
a) on one side of the body of the visualiser a mechanical connection part (2) suitable for connecting to a collaborating connection part (4) provided on an element selected from the group consisting of a predetermined implant root and an abutment corresponding to the predetermined implant root, whereby, when properly connected, the connection is defining, relative to the visualiser, the axis of orientation of the implant root (6) and the position of the top of the implant root along the axis of orientation (8), and
b) as part of the body of the visualiser (1) at least three markers (3), which contrast under electromagnetic radiation with their surroundings, whereby a marker is understood to represent any 2D or 3D geometrical object which is able to define one predetermined reference point of which the coordinates may be determined, the markers being observable and recognizable by an electromagnetic recognition technique applied from at least one observation point, whereby the markers on the visualiser define a geometric pattern, of which the electromagnetic recognition technique is capable of collecting the spatial information, and
(ii) a data file comprising the spatial information of the geometric pattern and referenced thereto information determining the axis of orientation of the implant root and the position of the top of the implant root along the axis of orientation, relative to the pattern, and also identifying the visualiser and the predetermined implant root,
whereby the spatial information of the geometric pattern which is comprised in the data file comprises the coordinates of the markers relative to a first three dimensional coordinate system,
whereby the markers (3) are suitable for the recognition technique to collect the coordinates of the markers relative to a second three dimensional coordinate system,
**characterised in that** the kit in parts further comprises a computer program comprising instructions so that the geometric pattern is recognisable by determining the number of markers (3) and the second set of coordinates of these markers, calculating the second set of distances between all the individual markers (3) observed and recognized as being markers of the pattern, and recognizing the pattern by retrieving a record in the data file which comprises a first set of marker coordinates which result in a first set of distances between the markers which corresponds to the second set of distances within a deviation for each distance of at most 50 micrometer (µm).

2. The kit in parts according to claim 1 wherein the visualiser comprises at least four markers (3) which are observable and recognizable from the at least one observation point.

3. The kit in parts according to claim 1 or 2 wherein the markers are located on a single substantially flat surface (5) of the visualiser body.

4. The kit in parts according to any one of the preceding claims whereby the electromagnetic recognition technique is selected from the group consisting of magnetic resonance imaging (MRI), stereographic photography, the taking of at least two pictures by two cameras from different observation points, the taking of at least two pictures by the same camera from two different observation points, 3D scanning, whereby the 3D scanning may use light selected from white light, coloured light, X-rays, structured light, and laser light, photogrammetry, and combinations thereof.

5. The kit in parts according to any one of the preceding claims further comprising at least one specimen of the predetermined dental implant root.

6. The kit in parts according to any one of the preceding claims comprising a set of at least two dental implant visualisers (1), whereby the patterns defined by the individual sets of markers are different and unique for each of the visualisers.

7. The kit in parts according to any one of the preceding claims comprising at least two visualisers and their corresponding implant roots, whereby the patterns of the visualisers are different, and distinguishable by the electromagnetic radiation technique.

8. The kit in parts according to any one of the preceding claims whereby the data file is available electronically.

9. A method for determining by means of the kit in parts according to any one of the preceding claims the axis of orientation (6) of a predetermined dental implant root, the position of the top of the implant root along the axis of orientation (8) and the type of the implant root, wherein the method comprises the step of applying the markers (3) to the visualiser (1) according to a predefined pattern contained in the data file comprising a plurality of patterns and whereby the set of distances between the marker coordinates for each of the patterns differs from the other sets present in the data file by a deviation of at least one of the distances by at least 50 urn, the method further comprising
(a) if necessary, properly connecting the visualiser (1) to an element selected from the abutment corresponding to the predetermined implant root which has been incorporated into an impression of the clinical situation taken from the patient, or an analogue of the predetermined implant root which was incorporated into a model of the clinical situation derived from an impression taken from the patient,
(b) while the visualiser is properly connected, using an electromagnetic recognition technique, which technique is applied from at least one observation point, recognising the markers (3) on the visualiser, obtaining the spatial information of the geometric pattern formed by the markers, and
(c) retrieving the spatial information of the geometric pattern in the data file together with information determining the axis of orientation (6) of the implant root and the position of the top of the implant along the axis of orientation (8), relative to the pattern on the visualiser, and also identifying the visualiser and the predetermined implant root.

10. The method according to claim 9 wherein the spatial information of the geometric pattern is obtained by determining the coordinates of each of the markers (3) relative to a second three-dimensional coordinate system.

11. The method according to claim 9 or 10 wherein the data file comprises the coordinates of the markers relative to a first three-dimensional coordinate system.

12. The method according to the preceding claim wherein the coordinates of the markers relative to the first three-dimensional coordinate system are obtained with the visualiser properly connected with its mechanical connection part (2) to a collaborating connection part (4', 4") which is identical to the collaborating connection part (4) selected from the group consisting of a predetermined implant root and an abutment corresponding to the predetermined implant root, whereby, when properly connected, the connection is defining, relative to the visualiser, the axis of orientation of the implant root (6) and the position of the top of the implant root along the axis of orientation (8).

13. The method according to any one of the claims 9-12, wherein the markers (3) are applied to the visualiser (1) by placing the markers on the surface (5) of the visualiser.

## Patentansprüche

1. Ein Set aus Teilen, welches Folgendes umfasst:
(i) einen Visualizer (1) für eine Zahnimplantat-Wurzel, wobei der Visualizer Folgendes umfasst:
a) an einer Seite des Körpers des Visualizers ein mechanisches Verbindungsteil (2), geeignet, um sich mit einem zusammenwirkenden Verbindungsteil (4) zu verbinden, bereitgestellt auf einem Element ausgewählt aus der Gruppe bestehend aus einer vorgegebenen Implantat-Wurzel und einem Stützpfeiler, der der vorgegebenen Implantat-Wurzel entspricht, wobei, wenn ordnungsgemäß verbunden, die Verbindung, in Bezug zum Visualizer, die Ausrichtungsachse der Implantat-Wurzel (6) und die Position der Oberseite der Implantat-Wurzel entlang der Ausrichtungsachse (8) definiert, und
b) als Teil des Körpers des Visualizers (1) zumindest drei Markierungen (3), welche unter elektromagnetischer Strahlung mit ihrer Umgebung kontrastieren, wodurch eine Markierung als Darstellung irgendeines geometrischen 2D- oder 3D-Objekts verstanden wird, welches in der Lage ist, einen vorgegebenen Bezugspunkt zu definieren, dessen Koordinaten bestimmt sein können, wobei die Markierungen durch eine elektromagnetische Erkennungstechnik beobachtbar und erkennbar sind, die von zumindest einem Beobachtungspunkt aus angewendet wird, wodurch die Markierungen auf dem Visualizer ein geometrisches Muster definieren, von dem die elektromagnetische Erkennungstechnik in der Lage ist die räumliche Information zu sammeln, und
(ii) einen Datenbestand, welcher die räumliche Information des geometrischen Musters und darauf bezogen Informationen umfasst, welche die Ausrichtungsachse der Implantat-Wurzel und die Position der Oberseite der Implantat-Wurzel entlang der Ausrichtungsachse, in Bezug zum Muster, bestimmen, und auch den Visualizer und die vorgegebene Implantat-Wurzel identifizieren,
wodurch die räumliche Information des geometrischen Musters, welche im Datenbestand enthalten ist, die Koordinaten der Markierungen in Bezug zu einem ersten dreidimensionalen Koordinatensystem umfasst,
wodurch die Markierungen (3) für die Erkennungstechnik geeignet sind, um die Koordinaten der Markierungen in Bezug zu einem zweiten dreidimensionalen Koordinatensystem zu sammeln,
**dadurch gekennzeichnet, dass** der Set aus Teilen ferner ein Computerprogramm umfasst, welches Anweisungen umfasst, sodass das geometrische Muster erkennbar ist durch Bestimmen der Anzahl von Markierungen (3) und des zweiten Satzes von Koordinaten dieser Markierungen, Berechnen des zweiten Satzes von Abständen zwischen allen individuellen Markierungen (3), die beobachtet und als Markierungen des Musters erkannt sind, und Erkennen des Musters durch Finden eines Eintrags im Datenbestand, welcher einen ersten Satz von Markierungskoordinaten umfasst, was einen ersten Satz von Abständen zwischen den Markierungen ergibt, der dem zweiten Satz von Abständen innerhalb einer Abweichung für jeden Abstand von höchstens 50 Mikrometern (µm) entspricht.

2. Das Set aus Teilen nach Anspruch 1, wobei der Visualizer zumindest vier Markierungen (3) umfasst, welche vom zumindest einen Beobachtungspunkt aus beobachtbar und erkennbar sind.

3. Das Set aus Teilen nach Anspruch 1 oder 2, wobei sich die Markierungen auf einer einzigen im Wesentlichen flachen Oberfläche (5) des Visualizer-Körpers befinden.

4. Das Set aus Teilen nach irgendeinem der vorigen Ansprüche, wobei die elektromagnetische Erkennungstechnik ausgewählt ist aus der Gruppe bestehend aus Magnetresonanztomographie (MRT), stereoskopischer Fotografie, dem Nehmen von mindestens zwei Bildern durch zwei Kameras aus verschiedenen Beobachtungspunkten, dem Nehmen von mindestens zwei Bildern durch dieselbe Kamera aus zwei verschiedenen Beobachtungspunkten, 3D-Scannen, wobei das 3D-Scannen Licht verwenden kann, ausgewählt aus weißem Licht, farbigem Licht, Röntgenstrahlen, strukturiertem Licht, und Laserlicht, Fotogrammmetrie, und Kombinationen davon.

5. Das Set aus Teilen nach irgendeinem der vorigen Ansprüche, welches ferner zumindest ein Exemplar der vorgegebenen Zahnimplantat-Wurzel umfasst.

6. Das Set aus Teilen nach irgendeinem der vorigen Ansprüche, welches einen Satz von zumindest zwei Zahnimplantat-Visualizern (1) umfasst, wobei die durch die individuellen Sätze von Markierungen definierten Muster unterschiedlich und für jeden der Visualizer einmalig sind.

7. Das Set aus Teilen nach irgendeinem der vorigen Ansprüche, welches zumindest zwei Visualizer und deren entsprechende Implantat-Wurzeln umfasst, wobei die Muster der Visualizer unterschiedlich und durch die elektromagnetische Strahlungstechnik unterscheidbar sind.

8. Das Set aus Teilen nach irgendeinem der vorigen Ansprüche, wobei der Datenbestand elektronisch verfügbar ist.

9. Ein Verfahren zur Bestimmung mittels des Sets aus Teilen nach irgendeinem der vorigen Ansprüche der Ausrichtungsachse (6) einer vorgegebenen Zahnimplantat-Wurzel, der Position der Oberseite der Implantat-Wurzel entlang der Ausrichtungsachse (8) und des Typs der Implantat-Wurzel, wobei das Verfahren den Schritt des Anbringens der Markierungen (3) am Visualizer (1) nach einem vordefinierten Muster umfasst, welches im Datenbestand enthalten ist, der eine Vielzahl von Mustern umfasst, und wobei der Satz von Abständen zwischen den Markierungskoordinaten für jedes der Muster sich von den anderen im Datenbestand vorhandenen Sätzen durch eine Abweichung von zumindest einem der Abstände um mindestens 50 µm unterscheidet, wobei das Verfahren ferner folgende Schritte umfasst:
a) wenn notwendig, ordnungsgemäßes Verbinden des Visualizers (1) mit einem Element ausgewählt aus dem Stützpfeiler, der der vorgegebenen Implantat-Wurzel entspricht, welche in einen Abdruck der klinischen Situation integriert wurde, der vom Patienten genommen wurde, oder einem Analogon der vorgegebenen Implantat-Wurzel, die in ein Modell der klinischen Situation integriert war, welches von einem vom Patienten genommenen Abdruck abgeleitet wurde,
b) während der Visualizer ordnungsgemäß verbunden ist, Verwenden einer elektromagnetischen Erkennungstechnik, wobei diese Technik von zumindest einem Beobachtungspunkt aus angewendet wird, Erkennen der Markierungen (3) auf dem Visualizer, Erhalten der räumlichen Information des geometrischen Musters, welches durch die Markierungen gebildet ist, und
c) Finden der räumlichen Information des geometrischen Musters im Datenbestand zusammen mit Informationen, welche die Ausrichtungsachse (6) der Implantat-Wurzel und die Position der Oberseite der Implantat-Wurzel entlang der Ausrichtungsachse (8), in Bezug zum Muster auf dem Visualizer, bestimmen, und auch Identifizieren des Visualizers und der vorgegebenen Implantat-Wurzel.

10. Das Verfahren nach Anspruch 9, wobei die räumliche Information des geometrischen Musters erhalten wird durch Bestimmen der Koordinaten jeder der Markierungen (3) in Bezug zu einem zweiten dreidimensionalen Koordinatensystem.

11. Das Verfahren nach Anspruch 9 oder 10, wobei der Datenbestand die Koordinaten der Markierungen in Bezug zu einem ersten dreidimensionalen Koordinatensystem umfasst.

12. Das Verfahren nach dem vorigen Anspruch, wobei die Koordinaten der Markierungen in Bezug zum ersten dreidimensionalen Koordinatensystem erhalten werden mit dem Visualizer ordnungsgemäß mit seinem mechanischen Verbindungsteil (2) mit einem zusammenwirkenden Verbindungsteil (4', 4") verbunden, welches identisch mit dem zusammenwirkenden Verbindungsteil (4) ist, ausgewählt aus der Gruppe bestehend aus einer vorgegebenen Implantat-Wurzel und einem Stützpfeiler, der der vorgegebenen Implantat-Wurzel entspricht, wodurch die Verbindung, wenn ordnungsgemäß verbunden, in Bezug zum Visualizer die Ausrichtungsachse der Implantat-Wurzel (6) und die Position der Oberseite der Implantat-Wurzel entlang der Ausrichtungsachse (8) definiert.

13. Das Verfahren nach irgendeinem der Ansprüche 9 bis 12, wobei die Markierungen (3) am Visualizer (1) angebracht werden, indem die Markierungen auf die Oberfläche (5) des Visualizers gesetzt werden.

## Revendications

1. Kit en parties comprenant
(i) un visualiseur (1) pour une racine d'implant dentaire, le visualiseur comprenant
a) sur un côté du corps du visualiseur, une partie de raccordement mécanique (2) adéquat pour se raccorder à une partie de raccordement collaboratif (4) fournie sur un élément sélectionné à partir du groupe consistant en une racine d'implant prédéterminée et une butée correspondant à la racine d'implant prédéterminée, selon lequel, lorsqu'elle est correctement raccordée, le raccordement définit, par rapport au visualiseur, l'axe d'orientation de la racine d'implant (6) et la position de la partie supérieure de la racine d'implant le long de l'axe d'orientation (8), et
b) en tant que partie du corps du visualiseur (1), au moins trois marqueurs (3), qui contrastent sous un rayonnement électromagnétique avec leurs environs, selon lequel il est entendu qu'un marqueur représente tout objet géométrique 2D ou 3D qui est apte à définir un point de référence prédéterminé dont les coordonnées peuvent être déterminées, les marqueurs pouvant être observés et reconnus par une technique de reconnaissance électromagnétique appliquée depuis au moins un point d'observation, selon lequel les marqueurs sur le visualiseur définissent un motif géométrique, dont la technique de reconnaissance électromagnétique est capable de collecter les informations spatiales, et
(ii) un fichier de données comprenant les informations spatiales du motif géométrique et en référence à celui-ci, des informations déterminant l'axe d'orientation de la racine d'implant et la position de la partie supérieure de la racine d'implant le long de l'axe d'orientation, par rapport au motif, et également identifiant le visualiseur et la racine d'implant prédéterminée,
selon lequel les informations spatiales du motif géométrique qui est compris dans le fichier de données comprennent les coordonnées des marqueurs par rapport à un premier système de coordonnées tridimensionnel,
selon lequel les marqueurs (3) sont adéquats pour la technique de reconnaissance pour collecter les coordonnées des marqueurs par rapport à un second système de coordonnées tridimensionnel,
**caractérisé en ce que** le kit en parties comprend en outre un programme informatique comprenant des instructions de sorte que le motif géométrique puisse être reconnu en déterminant le nombre de marqueurs (3) et le second ensemble de coordonnées de ces marqueurs, en calculant le second ensemble de distances entre tous les marqueurs individuels (3) observés et reconnus comme étant des marqueurs du motif, et en reconnaissant le motif en extrayant un enregistrement dans le fichier de données qui comprend un premier ensemble de coordonnées de marqueur qui donnent lieu à un premier ensemble de distances entre les marqueurs qui correspond au second ensemble de distances dans un écart pour chaque distance d'au plus 50 micromètres (µm).

2. Kit en parties selon la revendication 1, dans lequel le visualiseur comprend au moins quatre marqueurs (3) qui peuvent être observés et reconnus de l'au moins un point d'observation.

3. Kit en parties selon la revendication 1 ou 2, dans lequel les marqueurs sont situés sur une seule surface sensiblement plate (5) du corps de visualiseur.

4. Kit en parties selon l'une quelconque des revendications précédentes, selon lequel la technique de reconnaissance électromagnétique est sélectionnée à partir du groupe consistant en l'imagerie par résonance magnétique (IRM), la photographie stéréographique, la prise d'au moins deux photographies par deux appareils photographiques depuis des points d'observation différents, la prise d'au moins deux photographies par le même appareil photographique depuis deux points d'observation différents, le balayage 3D, selon lequel le balayage 3D peut utiliser de la lumière sélectionnée parmi de la lumière blanche, de la lumière colorée, des rayons X, de la lumière structurée, et de la lumière laser, la photogrammétrie, et des combinaisons de ceux-ci.

5. Kit en parties selon l'une quelconque des revendications précédentes, comprenant en outre au moins un prélèvement de la racine d'implant dentaire prédéterminée.

6. Kit en parties selon l'une quelconque des revendications précédentes, comprenant un ensemble d'au moins deux visualiseurs d'implant dentaire (1), selon lequel les motifs définis par les ensembles individuels de marqueurs sont différents et uniques pour chacun des visualiseurs.

7. Kit en parties selon l'une quelconque des revendications précédentes, comprenant au moins deux visualiseurs et leurs racines d'implant correspondantes, selon lequel les motifs des visualiseurs sont différents, et peuvent être distingués par la technique de rayonnement électromagnétique.

8. Kit en parties selon l'une quelconque des revendications précédentes, selon lequel le fichier de données est disponible électroniquement.

9. Procédé pour déterminer, au moyen du kit en parties selon l'une quelconque des revendications précédentes, l'axe d'orientation (6) d'une racine d'implant dentaire prédéterminée, la position de la partie supérieure de la racine d'implant le long de l'axe d'orientation (8) et le type de la racine d'implant, dans lequel le procédé comprend l'étape d'appliquer les marqueurs (3) au visualiseur (1) selon un motif prédéfini contenu dans le fichier de données comprenant une pluralité de motifs et selon lequel l'ensemble de distances entre les coordonnées de marqueur pour chacun des motifs diffère des autres ensembles présents dans le fichier de données par un écart d'au moins une des distances d'au moins 50 µm, le procédé comprenant en outre les étapes de
(a) si nécessaire, raccorder correctement le visualiseur (1) à un élément sélectionné parmi la butée correspondant à la racine d'implant prédéterminée qui a été intégrée à une impression de la situation clinique prise du patient, ou un analogue de la racine d'implant prédéterminée qui avait été intégrée dans un modèle de la situation clinique dérivée d'une impression prise du patient,
(b) tandis que le visualiseur est correctement raccordé, utiliser une technique de reconnaissance électromagnétique, laquelle technique est appliquée depuis au moins un point d'observation, reconnaître les marqueurs (3) sur le visualiseur, obtenir les informations spatiales du motif géométrique formé par les marqueurs, et
(c) extraire les informations spatiales du motif géométrique dans le fichier de données avec des informations déterminant l'axe d'orientation (6) de la racine d'implant et la position de la partie supérieure de l'implant le long de l'axe d'orientation (8), par rapport au motif sur le visualiseur, et également identifier le visualiseur et la racine d'implant prédéterminée.

10. Procédé selon la revendication 9, dans lequel les informations spatiales du motif géométrique sont obtenues en déterminant les coordonnées de chacun des marqueurs (3) par rapport à un second système de coordonnées tridimensionnel.

11. Procédé selon la revendication 9 ou 10, dans lequel le fichier de données comprend les coordonnées des marqueurs par rapport à un premier système de coordonnées tridimensionnel.

12. Procédé selon la revendication précédente, dans lequel les coordonnées des marqueurs par rapport au premier système de coordonnées tridimensionnel sont obtenues avec le visualiseur correctement raccordé avec sa partie de raccordement mécanique (2) à une partie de raccordement collaboratif (4', 4") qui est identique à la partie de raccordement collaboratif (4) sélectionnée à partir du groupe consistant en une racine d'implant prédéterminée et une butée correspondant à la racine d'implant prédéterminée, selon lequel, lorsqu'il est correctement raccordé, le raccordement définit, par rapport au visualiseur, l'axe d'orientation de la racine d'implant (6) et la position de la partie supérieure de la racine d'implant le long de l'axe d'orientation (8).

13. Procédé selon l'une quelconque des revendications 9 à 12, dans lequel les marqueurs (3) sont appliqués au visualiseur (1) en plaçant les marqueurs sur la surface (5) du visualiseur.
